# EUROPÄISCHE PATENTANMELDUNG

(11) **EP 0 556 479 A1**
(43) Veröffentlichungstag der Anmeldung: **25.08.1993**
(21) Anmeldenummer: 92121550.5
(22) Anmeldetag: 18.12.1992
(51) Int. Cl.: F02C 3/02

(54) **Druckwellenmaschine mit integrierter Verbrennung**

(30) Priorität: 17.02.1992 DE 4204678
(71) Anmelder: ASEA BROWN BOVERI AG, CH-5401 Baden (CH)
(72) Erfinder: Marling, Tino-Martin, W-7899 Berau (DE); Chyou, Yau-Pin, Dr., CH-5605 Dottikon (CH); Zauner, Erwin, Dr., CH-5400 Baden (CH)
(74) Vertreter: Klein, Ernest

(57) **Zusammenfassung**

Eine Druckwellenmaschine mit integrierter Verbrennung weist ein Zellenrad (10) auf, dass eine Anzahl Zellen (16) enthält, in denen ein immer wiederkehrender Zündungs- und Verbrennungsprozess abläuft. Um diesen immer wiederkehrenden Prozess aufrechtzuerhalten, soll weder eine Energiezufuhr von aussen, noch ein Steuereingriff erforderlich sein.

Es sind Heissgaskanäle (18) vorhanden, mit denen Heissgas aus einer Zelle (16) entnommen wird, in welcher der zu einem Zyklus gehörende Verbrennungsvorgang abgeschlossen wurde und in eine Zelle (16) zurückgeführt wird, in der sich das zu zündende Brennstoff-Luftgemisch befindet.

## Beschreibung

Die Erfindung betrifft eine Druckwellenmaschine mit integrierter Verbrennung, mit einem Zellenrad, welches sich zwischen je einem mit Eintritts- und Austrittsöffnungen versehenen luftseitigen und gasseitigen seitenteil dreht, und eine Anzahl Zellen aufweist, in denen ein immer wiederkehrender Zündungs- und Verbrennungsprozess abläuft, mit Mitteln zum selbsttätigen Zünden und Verbrennen des eintretenden frischen Gasgemisches.

In EP-B1-0 212 181 ist als Hochdruckverdichterteil einer Gasturbinenanlage eine Druckwellenmaschine vorgeschlagen worden, bei welcher das Hochdruckgas durch Selbstzündung eines Brennstoffes erzeugt wird, welcher seinerseits aus Brennstoffdüsen in einem Gehäuse der Druckwellenmaschine im Bereich der Niederdruckkanäle in den Zellenrotor eingespritzt bzw. eingeblasen wird. Die Selbstzündung erfolgt dabei detonationsartig beim Zusammentreffen des Brennstoff/Luft-Gemisches einer im Bereich der Brennstoffeinbringung auftretenden Kompressionswelle. Die mithin auftretenden Druckwellen erzeugen einerseits in den entsprechenden Bereichen des Rotorraumes Hochdruckluft, die durch einen Hochdruckluftkanal einer Brennkammer zur Erzeugung von Treibgas für die Gasturbine zugeführt wird.

Die Aufgabe, welche mit der vorliegenden Erfindung gelöst werden soll, besteht in der Schaffung einer Druckwellenmaschine, bei der weder Energiezufuhr, noch Steuereingriffe von aussen erforderlich sind, um den immer wiederkehrenden Zündungs- und Verbrennungsprozess aufrechtzuerhalten. Ausserdem soll die Druckwellenmaschine in der Lage sein, sich an veränderte Betriebsparameter anzupassen, insbesondere an die Veränderung der Drehzahl. Schliesslich sollen bewegliche Teile in der Druckwellenmaschine vermieden werden.

Diese Aufgabe wird erfindungsgemäss dadurch gelöst, dass die genannten Mittel durch Kanäle gebildet werden, mit denen Heissgas aus einer Zelle entnommen wird, in welcher der zu einem Zyklus gehörende Verbrennungsvorgang abgeschlossen wurde und in eine Zelle zurückgeführt wird, in der sich das zu zündende Gasluftgemisch befindet. Vorzugsweise kann an die genannten Kanäle eine Brennstoffzuleitung angeschlossen sein, um das erwähnte Heissgas anzureichern. Für den Anfahrtvorgang sind vorzugsweise steuerbare Mittel zum Zünden des frischen Gasluftgemisches vorhanden, insbesondere Zündkerzen oder stationär gepulste Zündbrenner. Vorzugsweise ist sowohl im luftseitigen als auch im gasseitigen Seitenteil je ein Kanal vorhanden, um Heissgas an beiden Enden einer Zelle dem zu zündenden Gasluftgemisch zuzuführen.

Diese Vorrichtung hat folgende Vorteile:
- Durch diese Kanäle wird der immer wiederkehrende Zündungs- und Verbrennungsprozess automatisch, d.h. selbsttätig aufrechterhalten.
- Dank dieser Kanäle ist weder Energiezufuhr, noch ein Steuereingriff von aussen erforderlich. Eine eventuelle Brennstoffzugabe ist vorteilhaft. Eine Anpassung an veränderte Betriebsparameter ist nicht erforderlich.
- Die Vorrichtung benötigt keine beweglichen Teile
- Die Schad- oder Totvolumina werden vermieden.

Ein Ausführungsbeispiel der erfindungsgemässen Druckwellenmaschine ist im folgenden anhand der beigefügten Zeichnung ausführlich beschrieben. Es zeigt:
- Fig. 1: eine schematische Darstellung einer Druckwellenmaschine
- Fig. 2: eine Seitenansicht der in Fig. 1 dargestellten Druckwellenmaschine in Richtung des Pfeiles A gesehen.

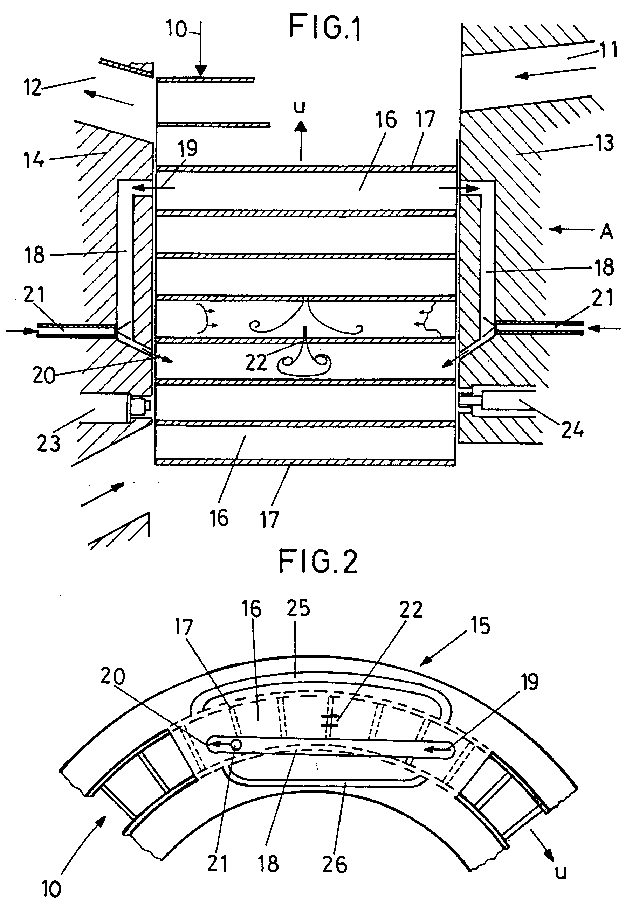

Gemäss Fig. 1 befindet sich ein Zellenrad 10 zwischen einem luftseitigen Seitenteil 13 und einem gasseitigen Seitenteil 14, die jeweils mit Eintrittsöffnungen 11 und Austrittsöffnungen 12 versehen sind. In Fig. 1 ist im luftseitigen Seitenteil 13 lediglich eine einzige Eintrittsöffnung 11 und im gasseitigen Seitenteil 14 nur eine Austrittsöffnung 12 dargestellt. Diese beiden Seitenteile 13 und 14 gehören zu einem Statorgehäuse 15 (siehe Fig. 2). Wie in Fig. 1 und 2 durch Pfeile U angedeutet, dreht sich das Zellenrad 10 gegenüber den beiden Seitenteilen 13 und 14 des Statorgehäuses 15. Das Zeilenrad 10 weist eine Anzahl Zellen 16 auf, die durch Trennwände 17 voneinander abgegrenzt sind. Diese Zellen 16 sind an beiden Enden offen, so dass durch die Eintrittsöffnung 11 ein Brennstoff-Luftgemisch in Zellen 16 eindringen kann. Sobald dieses Brennstoff-Luftgemisch in der Zelle 16 (weiter unten beschrieben) zu einem Abgas verbrannt ist, kann dieses Abgas durch die Austrittsöffnung 12 des Seitenteils 14 entweichen. Zum Zünden des Brennstoff-Luftgemisches dienen Heissgasröhren oder Heissgaskanäle 18. Am oberen Ende 19 dieser Heissgaskanäle 18 kann das aus dem Brennstoff-Luftgemisch durch Verbrennen entstandene Abgas in den Heissgaskanal 18 eindringen. Am unteren Ende 20 kann aus dem Heissgaskanal 18 heisses Abgas in eine Zelle 16 eindringen, die mit einem Brennstoff-Luftgemisch gefüllt ist.

Dieses im Heissgaskanal 18 befindliche Abgas ist in der Lage, das Brennstoff-Luftgemisch einer Zelle 16 zu zünden.

An diese Heissgaskanäle 18 sind Zusatzbrennstoffleitungen 21 angeschlossen, durch welche zusätzlicher Brennstoff über die Heissgaskanäle 18 in die Zellen 16 eingeleitet werden kann, um, falls erforderlich, den Verbrennungsvorgang zu beeinflussen. Falls erwünscht, können in den Trennwänden 17 zwischen den Zellen 16 Bohrungen 22 vorhanden sein. Durch diese Bohrungen kann heisses Abgas aus einer Zelle 16 in eine benachbarte Zelle 16 gelangen, in der ein Brennstoffluftgemisch enthalten ist. Zum Starten der beschriebenen Druckwellenmaschine ist z.B. eine Zündkerze 23 oder ein Zündbrenner 24 oder beides vorhanden. Mit dieser Zündkerze 23 oder mit diesem Zündbrenner 24 kann das in einer Zelle 16 befindliche Brennstoff-Luftgemisch gezündet werden, solange in den Heissgaskanälen 18 noch keine heissen Abgase vorhanden sind.

Die Wirkungsweise der hier beschriebenen Druckwellenmaschine ist wie folgt:
Durch die Eintrittsöffnung 11 des luftseitigen Seitenteils 13 kann ein Brennstoff-Luftgemisch in die Zellen 16 des Zellenrades 10 eingeleitet werden. Das Zellenrad 10 dreht sich in Richtung des Pfeiles U. Sobald eine mit einem Brennstoff-Luftgemisch gefüllte Zelle 16 in den Bereich der Zündkerze 23 oder des Zündbrenners 24 gelangt, kann das Brennstoff-Luftgemisch gezündet werden. Das dabei entstehende heisse Abgas kann in die Heissgaskanäle 18 eindringen, sobald eine mit heissem Abgas gefüllte Zelle 16 in den Bereich der oberen Enden 19 oder Oeffnungen der Heissgaskanäle 18 gelangt.

Dieses Hochdruck-Heissgas gelangt durch die unteren Enden 20 oder Oeffnungen der Heissgaskanäle 18 in eine Zelle, die mit einem frischen Brennstoff-Luftgemisch gefüllt ist, und kann dieses Brennstoff-Luftgemisch zünden. Nach dem Start der Druckwellenmaschine sind daher weder die Zündkerze 23 noch der Zündbrenner 24 erforderlich.

Die unteren Enden 20 des Heissgaskanales sind düsenförmig ausgebildet. Durch die Wahl des Düsendurchmessers und durch die Positionierung dieser Enden 20 sowie durch die Wahl des Einströmwinkels kann die Eindringtiefe und die Mischzeit des ein Zündgas bildenden heissen Abgases aus dem Heissgaskanal 18 gesteuert werden, wodurch sich der Zündvorgang beeinflussen lässt. Zwischem dem Eintritt der heissen Abgase in den Heissgaskanal 18 und dem Austritt dieser heissen Abgase aus diesem Heissgaskanal erfolgt die Verbrennung des Brennstoff-Luftgemisches in den Zellen 16 des Zellenrades 10.

Insbesondere bei Teillast der Druckwellenmaschine kann es, falls magere Gemische verwendet werden, nützlich sein, dem heissen Abgas in den Heissgaskanälen 18 durch die Zusatzbrennstoff-Leistungen 21 Brennstoff hinzuzufügen, wodurch ein Nachverbrennungsprozess ausgelöst wird. Durch die dabei entstehende höhere Temperatur und die sehr aktiven Zwischenprodukte wird die Zündung begünstigt.

Das Hochdruck-Heissgas kann durch Bohrungen 22 in den Trennwänden 17 direkt in die benachbarte, mit einem Brennstoff-Luftgemisch gefüllte Zelle 16 geleitet werden. Durch den Durchmesser dieser Bohrungen 22 und durch die Zahl solcher Bohrungen 22 können Mischzeit und Zündungsverzugszeit beeinflusst werden. Hier muss die Zündungsverzugszeit in jedem Fall kürzer sein, als die Zeit, während der sich das Zellenrad 10 um eine Breite der Zelle 16 dreht.

Heissgaskanäle 18 und Bohrungen 22 können miteinander kombiniert werden, d.h. neben der Heissgaseindüsung durch die Kanäle 18 kann Heissgas durch die Bohrungen 22 in die Zelle 16 gelangen. Dies kann unter Umständen Vorteile haben. Es entstehen grosskalige Wirbel und höhere Turbulenzen im mittleren Bereich der Zelle 16, die von der seitlichen Eindüsung durch die Kanäle 18 nicht erreicht wird, wodurch die Flammenausbreitung unterstützt wird.

In der Zeichnung Fig. 1 und 2 sind zwei Heissgaskanäle 18 zu beiden Seiten des Zellenrades 10 gezeigt. Selbstverständlich können diese Kanäle auch radial oberhalb oder innerhalb des Zellenrades 10 im Statorgehäuse 15 angeordnet sein, wie durch die Kanäle 25 und 26 angedeutet ist.

Je nach Bedarf werden ein oder mehrere der erwähnten Heissluftkanäle 18, 25 oder 26 vorhanden sein.

Bei der Zusatzeindüsung von Brennstoff über die Leitungen 21 lässt sich überdies ein flüssiger Brennstoff vorsehen, ohne dabei Abbrüche an die Qualität der Gemischbildung in Kauf nehmen zu müssen. Der flüssige Brennstoffnebel wird mit dem über die Leitung 18 strömenden Heissgas vermischt, wobei die hohe Temperatur dieses Heissgases dafür sorgt, dass eine vollständige Vergasung des hier eingedüsten flüssigen Brennstoffes stattfindet. Es ist selbstverständlich, dass die vorzugsweise am Ende der Heissgasleitung 18 eingedüste Brennstoffmenge in Relation zur Masse der über diese Leitung rückgeführten Heissgase stehen muss. Bei dieser Konfiguration lässt sich die Anlage als Dualbrenneinrichtung betreiben.

## Patentansprüche

1. Druckwellenmaschine mit integrierter Verbrennung, mit einem Zellenrad (10), welches sich zwischen je einem mit Eintritts- und Austrittsöffnungen (11, 12) versehenen luftseitigen und gasseitigen Seitenteil (13, 14) dreht und eine Anzahl Zellen (16) aufweist, in denen ein immer wiederkehrender Zündungs- und Verbrennungsprozess abläuft, mit Mitteln (18) zum selbsttätigen Zünden und Verbrennen des eintretenden frischen Gasgemisches, dadurch gekennzeichnet, dass die genannten Mittel durch Kanäle (18) gebildet werden, mit denen Heissgas aus einer Zelle (16) entnommen wird, in welcher der zu einem Zyklus gehörende Verbrennungsvorgang abgeschlossen wurde, und in eine Zelle (16) zurückgeführt wird, in der sich das zu zündende Brennstoff-Luftgemisch befindet, und dass an die genannten Kanäle (18) eine Brennstoff-zuleitung (21) angeschlossen ist, um das erwähnte Heissgas mit Brennstoff anzureichern.

2. Druckwellenmaschine nach Anspruch 1, dadurch gekennzeichnet, dass für den Anfahrvorgang steuerbare Mittel (23, 24) zum Zünden des frischen Gasluftgemisches vorhanden sind, insbesondere Zündkerzen (23) oder stationär gepulste Zündbrenner (24).

3. Druckwellenmaschine nach einem der Ansprüche 1 und 2, dadurch gekennzeichnet, dass mindestens ein Kanal (18) in einem der Seitenteile (13, 14) angeordnet ist und sich seitlich neben dem Zellenrad (10) befindet, um Heissgas dem zu zündenden Brennstoff-Luftgemisch zuzuführen.

4. Druckwellenmaschine nach einem der Ansprüche 1 bis 3, dadurch gekennzeichnet, dass sowohl im luftseitigen als auch im gasseitigen Seitenteil (13, 14) je ein Kanal (18) vorhanden ist, um Heissgas an beiden Enden einer Zelle dem zu zündenden Brennstoff-Luftgemisch zuzuführen.

5. Druckwellenmaschine nach einem der Ansprüche 1 und 2, dadurch gekennzeichnet, dass mindestens ein Kanal (25, 26) in einem Statorgehäuse (15) angeordnet ist, und sich radial ausserhalb oder innerhalb des Zellenrades (10) befindet, um Heissgas dem zu zündenden Brennstoff-Luftgemisch zuzuführen.

6. Druckwellenmaschine nach Anspruch 1, dadurch gekennzeichnet, dass der eingedüste Brennstoff über die Heissgaskanäle (18) ein flüssiger Brennstoff ist.
